# EUROPÄISCHE PATENTSCHRIFT

(11) **EP 2 048 023 B1**
(45) Veröffentlichungstag und Bekanntmachung des Hinweises auf die Patenterteilung: **24.10.2012**
(21) Anmeldenummer: 08017069.9
(22) Anmeldetag: 27.09.2008
(51) Int. Cl.: B60N 2/30

(54) **Kraftfahrzeugsitz mit einem Lehnenschwenkmechanismus**
Vehicle seat with a back pivot mechanism
Siège de véhicule doté d'un mécanisme de pivotement du dossier

(30) Priorität: 11.10.2007 DE 102007048701
(43) Veröffentlichungstag der Anmeldung: 15.04.2009
(73) Patentinhaber: GM Global Technology Operations LLC, Detroit, MI 48265-3000 (US)
(72) Erfinder: Schlamann, Hermann-Walter, 55288 Armsheim (DE)
(74) Vertreter: Strauss, Peter

(56) Entgegenhaltungen:
- EP-A- 1 767 395
- DE-A1-102005 002 143
- FR-A- 2 829 441
- JP-A- 2003 220 864

## Beschreibung

### Beschreibung

Die vorliegende Erfindung betrifft einen Kraftfahrzeugsitz mit einer Rückenlehne, einem Sitzteil, das um eine erste Querachse verschwenkbar an der Rückenlehne befestigt ist, und einem Lehnenschwenkmechanismus, wobei die Rückenlehne um eine zweite Querachse verschwenkbar an dem Lehnenschwenkmechanismus befestigt ist, so dass die Rückenlehne von einer Gebrauchsstellung, in der das Sitzteil eine erste Position einnimmt, um die zweite Querachse nach vorne in eine Nichtgebrauchsstellung verschwenkt werden kann, in der das Sitzteil eine zweite Position einnimmt, wobei das Sitzteil in der zweiten Position gegenüber der ersten Position nach hinten versetzt ist.

Die DE 10 2006 033 554 A1 beschreibt einen klappbaren Fahrzeugsitz. Der bekannte Fahrzeugsitz weist eine Lehne und einen Kissenträger für das Sitzkissen auf, wobei der Kissenträger über ein Tragteil derart an der Lehne befestigt ist, dass der Kissenträger relativ zu der Lehne um eine erste Querachse verschwenkt werden kann. Darüber hinaus ist ein Lehnenschwenkmechanismus für die Lehne vorgesehen, wobei die Lehne um eine zweite Querachse verschwenkbar an dem Lehnenschwenkmechanismus befestigt ist. Die zweite Querachse ist dabei ortsfest, d. h. unbeweglich innerhalb des Kraftfahrzeugs, angeordnet, es sei denn, der gesamte Fahrzeugsitz würde innerhalb des Kraftfahrzeugs in Längs- oder Querrichtung verschoben werden. Die Lehne kann nun von einer Gebrauchsstellung, in der die Lehne im Wesentlichen aufrecht angeordnet ist, um die zweite Querachse nach vorne in eine Nichtgebrauchsstellung verschwenkt werden, in der die Lehne im Wesentlichen horizontal oberhalb des Sitzteils angeordnet ist. Der Kissenträger des Sitzteils ist dabei derart über das Tragteil mit der Lehne verbunden, dass dieser durch die Bewegung der Lehne von der Gebrauchsstellung in die Nichtgebrauchsstellung von einer ersten Position in eine zweite Position bewegt wird, wobei der Kissenträger in der zweiten Position gegenüber der ersten Position nach hinten versetzt und abgesenkt ist. Durch die Verschiebung des Kissenträgers nach hinten und unten kann die Lehne in der Nichtgebrauchsstellung in etwa den Platz einnehmen, den zuvor der Sitzkissenträger des Sitzteils eingenommen hat, so dass der Fahrzeugsitz in der Nichtgebrauchsstellung nur wenig Raum innerhalb des Fahrzeugs beansprucht.

Bei dem zuvor beschriebenen bekannten Fahrzeugsitz besteht jedoch der Nachteil, dass sich der Fahrzeugsitz in der Nichtgebrauchsstellung noch immer relativ weit in Sitzrichtung nach vorne erstreckt, selbst wenn das Sitzteil bzw. der Sitzkissenträger durch die Schwenkbewegung nach hinten versetzt wurde. So kann der bekannte Fahrzeugsitz beispielsweise nicht in der zweiten oder dritten Sitzreihe eines Kraftfahrzeugs angeordnet werden, wenn die jeweils davor angeordnete Sitzreihe relativ dicht an derjenigen Sitzreihe angeordnet ist, in der sich der bekannte Fahrzeugsitz befindet. In einem solchen Fall könnte es zu einer Kollision der Rückenlehne des Fahrzeugsitzes mit der Rückenlehne eines anderen Fahrzeugsitzes in der davor angeordneten Sitzreihe kommen. Darüber hinaus ist es in einigen Fällen wünschenswert, dass das Sitzteil innerhalb des Kraftfahrzeugs noch weiter nach hinten versetzt ist, wenn sich der Fahrzeugsitz in der Nichtgebrauchsstellung befindet. Des Weiteren benötigt die Lehne in der Nichtgebrauchsstellung einen großen Raum in Höhenrichtung.

Um die vorstehend genannten Nachteile zu überwinden, schlägt die als nächstliegender Stand der Technik betrachtete JP 2003-220864 A einen Kraftfahrzeugsitz vor, bei dem durch das Verschwenken der Rückenlehne in die Nichtgebrauchsstellung nicht nur das Sitzteil, sondern auch die Querachse der Rückenlehne, um die die Rückenlehne verschwenkbar ist, nach hinten versetzbar ist. Ein solcher Kraftfahrzeugsitz hat sich bewährt, ist jedoch insofern verbesserungswürdig, als dass dessen Aufbau kompliziert und der damit verbundene Herstellungsaufwand erhöht ist.

Es ist daher eine Aufgabe der vorliegenden Erfindung, einen Kraftfahrzeugsitz zu schaffen, der die vorstehend genannten Nachteile überwindet, einen relativ einfachen Aufbau hat und somit einen geringen Herstellungsaufwand bedingt.

Diese Aufgabe wird durch die in Patentanspruch 1 angegebenen Merkmale gelöst. Vorteilhafte Ausführungsformen der Erfindung sind Gegenstand der Unteransprüche.

Der erfindungsgemäße Kraftfahrzeugsitz weist eine Rückenlehne und ein Sitzteil auf, wobei das Sitzteil um eine Querachse verschwenkbar an der Rückenlehne befestigt ist. Der Kraftfahrzeugsitz umfasst ferner einen Sitzteilschwenkmechanismus und einen Lehnenschwenkmechanismus, wobei die Rückenlehne um eine zweite Querachse verschwenkbar an dem Lehnenschwenkmechanismus befestigt ist. Somit kann die Rückenlehne von einer Gebrauchsstellung um die zweite Querachse nach vorne in eine Nichtgebrauchsstellung verschwenkt werden. In der Gebrauchsstellung kann die Rückenlehne beispielsweise aufrecht angeordnet sein, wohingegen diese in der Nichtgebrauchsstellung horizontal ausgerichtet sein kann. Befindet sich die Rückenlehne in der Gebrauchsstellung, so nimmt das Sitzteil eine erste Position ein. Durch die Schwenkbewegung der Rückenlehne in die Nichtgebrauchsstellung wird auch das an der Rückenlehne befestigte Sitzteil in eine zweite Position bewegt, in der das Sitzteil gegenüber der ersten Position nach hinten versetzt ist. Erfindungsgemäß ist der Lehnenschwenkmechanismus derart ausgebildet, dass die zweite Querachse durch Verschwenken der Rückenlehne in die Nichtgebrauchsstellung nach hinten versetzt wird. Durch das rückwärtige Versetzen der zweiten Querachse, was einem Versetzen der Rückenlehne in der Nichtgebrauchsstellung nach hinten entspricht, erstreckt sich die Rückenlehne in der Nichtgebrauchsstellung nicht so weit nach vorne, wie dies beim Stand der Technik nach der DE 10 2006 033 554 A1 der Fall ist. Vielmehr kann der erfindungsgemäße Kraftfahrzeugsitz besonders vorteilhaft in einer zweiten, dritten oder hintersten Sitzreihe angeordnet werden, ohne dass die nach vorne verschwenkte Rückenlehne mit der Rückenlehne eines Fahrzeugsitzes in der davor angeordneten Sitzreihe kollidiert. So entfaltet der erfindungsgemäße Kraftfahrzeugsitz seine Vorteile insbesondere in einem Kraftfahrzeug, das zwei oder mehrere, eng beieinander liegende Sitzreihen aufweist. Darüber hinaus muss die Befestigung des Sitzteils an der Rückenlehne nicht zwangsläufig in einem unteren Abschnitt der Rückenlehne erfolgen, der sich unterhalb der zweiten Querachse erstreckt. Vielmehr kann das Sitzteil auch in einem oberen Abschnitt der Rückenlehne befestigt werden, der sich oberhalb der zweiten Querachse erstreckt, zumal das rückwärtige Versetzen des Sitzteils in die zweite Position bereits durch das rückwärtige Versetzen der zweiten Querachse bzw. der Rückenlehne erfolgt. Es ist ferner eine Stützeinrichtung vorgesehen, bei der es sich beispielsweise um den Fahrzeugboden und/oder einen Fahrzeugsitzunterbau handeln kann. Der Lehnenschwenkmechanismus weist einen ersten Schwenkhebel, der einerseits um die zweite Querachse verschwenkbar an der Rückenlehne und andererseits um eine dritte Querachse verschwenkbar an der Stützeinrichtung befestigt ist, und einen zweiten Schwenkhebel auf, der einerseits um eine vierte Querachse verschwenkbar an der Stützeinrichtung und andererseits um eine fünfte Querachse verschwenkbar an der Rückenlehne befestigt ist. Die zweite, dritte, vierte und fünfte Querachse bilden somit bezogen auf eine Seitenansicht des Kraftfahrzeugsitzes ein Gelenkviereck aus, das einerseits eine hohe Stabilität der Rückenlehne gewährleistet und andererseits besonders einfach realisiert erden kann. Um den Kraftfahrzeugsitz in konstruktiver Hinsicht besonders einfach realisieren zu können, entspricht der Abstand zwischen der zweiten und der dritten Querachse dem Abstand zwischen der vierten und der fünften Querachse. Auch sind der erste und zweite Schwenkhebel identisch ausgebildet, um die Bauteilevielfalt bei dem erfindungsgemäßen Kraftfahrzeugsitz und somit den Herstellungsaufwand zu reduzieren.

In einer bevorzugten Ausführungsform des erfindungsgemäßen Kraftfahrzeugsitzes ist der Lehnenschwenkmechanismus derart ausgebildet, dass die zweite Querachse durch Verschwenken der Rückenlehne in die Nichtgebrauchsstellung nach unten versetzt werden kann. Auf diese Weise nimmt die Rückenlehne in der Nichtgebrauchsstellung in Höhenrichtung weniger Platz in Anspruch.

In einer besonders bevorzugten Ausführungsform des erfindungsgemäßen Kraftfahrzeugsitzes weist die Rückenlehne bezogen auf deren Längsrichtung einen oberen Abschnitt und einen unteren Abschnitt auf. Der obere Abschnitt ist vor der zweiten Querachse angeordnet, wohingegen sich der untere Abschnitt hinter der zweiten Querachse erstreckt. Das Sitzteil ist dabei um die erste Querachse verschwenkbar an dem unteren Abschnitt der Rückenlehne befestigt. Auf diese Weise wird das Sitzteil sowohl durch die Schwenkbewegung der Rückenlehne um die zweite Querachse als auch durch das rückwärtige Versetzen der Rückenlehne beim Verschwenken in die Nichtgebrauchsstellung nach hinten versetzt. Somit wird das Sitzteil innerhalb des Kraftfahrzeugs besonders weit nach hinten versetzt, so dass die nach hinten versetzte Rückenlehne in der Nichtgebrauchsstellung in etwa die Position einnehmen kann, die zuvor durch das Sitzteil in der ersten Position eingenommen wurde. Hierdurch wird eine besonders Platz sparende Unterbringung des Kraftfahrzeugsitzes in der Nichtgebrauchsstellung erzielt.

In einer vorteilhaften Ausführungsform des erfindungsgemäßen Kraftfahrzeugsitzes ist die Stützeinrichtung ein Fahrzeugboden und/oder ein Fahrzeugsitzunterbau. So kann der Kraftfahrzeugsitz beispielsweise unmittelbar an dem Fahrzeugboden befestigt sein. Es ist jedoch ferner möglich, dass der Kraftfahrzeugsitz einen Fahrzeugsitzunterbau aufweist, der wiederum an dem Fahrzeugboden angeordnet ist, wobei der Fahrzeugsitzunterbau wiederum verschiebbar an dem Fahrzeugboden befestigt sein könnte.

Um mit Hilfe des Lehnenschwenkmechanismus eine ausreichende Verschwenkbarkeit der Rückenlehne zu ermöglichen, ist der Abstand zwischen der zweiten und der fünften Querachse in einer weiteren bevorzugten Ausführungsform des erfindungsgemäßen Kraftfahrzeugsitzes kleiner als der Abstand zwischen der dritten und vierten Querachse ausgebildet. Die hier wie auch nachstehend genannten Abstände bezeichnen die Abstände zwischen den Querachsen, wenn diese in Querrichtung, also von der Seite, betrachtet werden.

Gemäß einer besonders vorteilhaften Ausführungsform des erfindungsgemäßen Kraftfahrzeugsitzes ist die dritte Querachse höher als die vierte Querachse angeordnet.

Gemäß einer weiteren vorteilhaften Ausführungsform des erfindungsgemäßen Kraftfahrzeugsitzes ist die vierte Querachse entgegen der Sitzrichtung hinter der dritten Querachse angeordnet.

In einer weiteren besonders vorteilhaften Ausführungsform des erfindungsgemäßen Kraftfahrzeugsitzes wirkt der Sitzteilschwenkmechanismus derart mit dem Lehnenschwenkmechanismus zusammen, dass das Sitzteil in der ersten Position gegenüber einer Horizontalen geneigt und in der zweiten Position in der Horizontalen angeordnet ist. Eine solche Neigung des Sitzteils in der ersten Position ist wünschenswert, da der auf dem Sitzteil sitzende Fahrzeuginsasse hierdurch besonders sicher auf dem Kraftfahrzeugsitz sitzen kann. Zu diesem Zweck sollte das Sitzteil in Sitzrichtung nach oben geneigt sein. In der zweiten Position des Sitzteils, die auch als Stauposition bezeichnet werden könnte, ist dies jedoch nicht mehr erforderlich, so dass durch die horizontale Anordnung ein besonders Platz sparendes Verstauen möglich ist.

Um den von dem Kraftfahrzeugsitz in der Nichtgebrauchsstellung eingenommenen Raum noch kleiner zu gestalten, ist das Sitzteil in einer weiteren vorteilhaften Ausführungsform des erfindungsgemäßen Kraftfahrzeugsitzes in der zweiten Position ferner gegenüber der ersten Position abgesenkt.

Um einen besonders einfachen Sitzteilschwenkmechanismus zu realisieren, weist dieser in einer weiteren besonders bevorzugten Ausführungsform des erfindungsgemäßen Kraftfahrzeugsitzes einen dritten Schwenkhebel auf, der einerseits um eine sechste Querachse verschwenkbar an dem Sitzteil und andererseits um eine siebte Querachse verschwenkbar an der Stützeinrichtung befestigt ist.

In einer weiteren vorteilhaften Ausführungsform des erfindungsgemäßen Kraftfahrzeugsitzes ist der dritte Schwenkhebel in der ersten Position des Sitzteils nach vorne geneigt.

Gemäß einer weiteren vorteilhaften Ausführungsform des erfindungsgemäßen Kraftfahrzeugsitzes ist der dritte Schwenkhebel in der zweiten Position des Sitzteils nach hinten geneigt.

In einer weiteren bevorzugten Ausführungsform des erfindungsgemäßen Kraftfahrzeugsitzes sind die dritte, vierte und siebte Querachse unbeweglich gegenüber der Stützeinrichtung angeordnet.

Die Erfindung wird im Folgenden anhand einer beispielhaften Ausführungsform unter Bezugnahme auf die beigefügten Zeichnungen näher erläutert. Es zeigen:
- Fig. 1: eine schematische Seitenansicht einer Ausführungsform des erfindungsgemäßen Kraftfahrzeugsitzes mit der Rückenlehne in der Gebrauchsstellung und dem Sitzteil in der ersten Position,
- Fig. 2 bis Fig. 4: den Kraftfahrzeugsitz von Fig. 1 während des Verschwenkens der Rückenlehne von der Gebrauchsstellung in die Nichtgebrauchsstellung und
- Fig. 5: den Kraftfahrzeugsitz aus den Fig. 1 bis 4 mit der Rückenlehne in der Nichtgebrauchsstellung und dem Sitzteil in der zweiten Position.

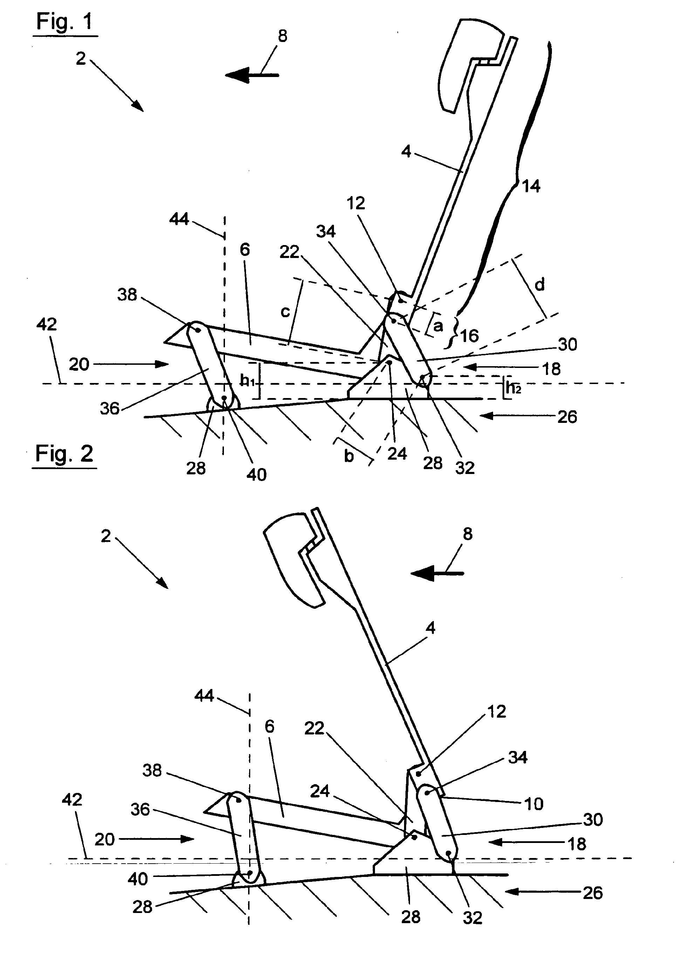

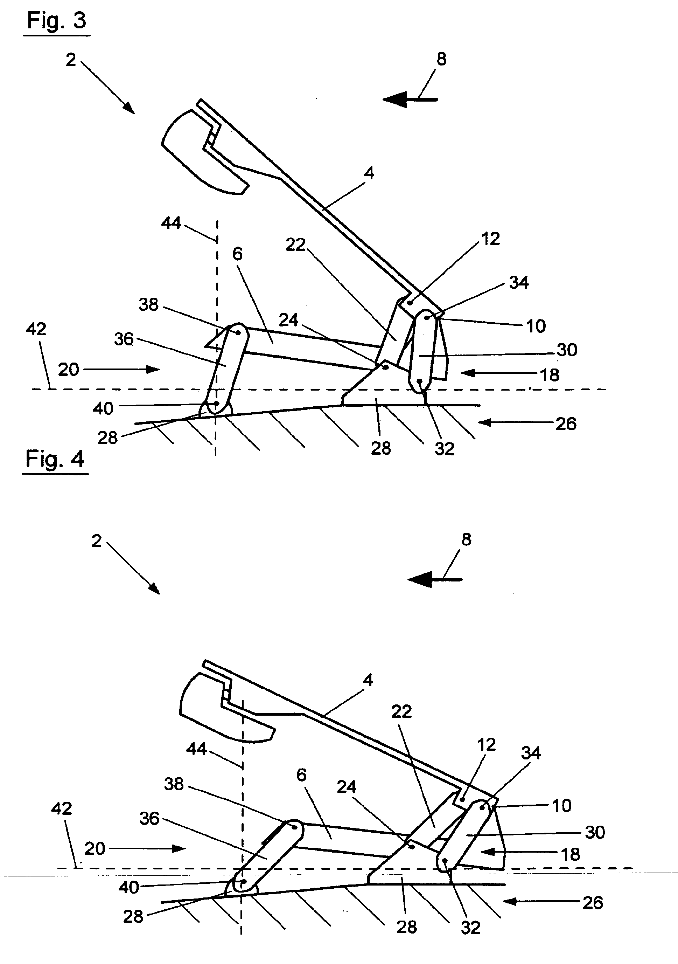

Fig. 1 zeigt eine Ausführungsform des erfindungsgemäßen Kraftfahrzeugsitzes 2, der eine Rückenlehne 4 und ein Sitzteil 6 aufweist. Die Sitzrichtung des Kraftfahrzeugsitzes 2 ist in den Figuren anhand des Pfeils 8 angedeutet. Das Sitzteil 6 ist mit einem entgegen der Sitzrichtung 8 hinteren Abschnitt um eine erste Querachse 10 verschwenkbar an der Rückenlehne 4 befestigt, wobei die erste Querachse 10 in Fig. 1 verdeckt jedoch in den Fig. 2 bis 5 zu sehen ist. Die Rückenlehne 4 kann um eine zweite Querachse 12 nach vorne in Richtung des Sitzteils 6 verschwenkt werden. Dabei unterteilt sich die Rückenlehne 4 bezogen auf deren Längsrichtung in einen oberen Abschnitt 14 und einen unteren Abschnitt 16. Während sich der obere Abschnitt 14 vor der zweiten Querachse 12 erstreckt, ist der untere Abschnitt 16 hinter der zweiten Querachse 12 angeordnet. Das Sitzteil 6 ist dabei um die erste Querachse 10 verschwenkbar an dem Ende des unteren Abschnitts 16 befestigt.

Um den Kraftfahrzeugsitz 2 verschwenken zu können, ist ein Lehnenschwenkmechanismus 18 und ein Sitzteilschwenkmechanismus 20 vorgesehen. Die beiden Schwenkmechanismen 18, 20 können jeweils auf beiden Seiten des Kraftfahrzeugsitzes 2 angeordnet sein, wobei hier lediglich die linke Seite des Kraftfahrzeugsitzes 2 beschrieben wird und diese Beschreibung analog für die rechte Seite des Kraftfahrzeugsitzes 2 gilt.

Wie bereits zuvor angedeutet, ist die Rückenlehne 4 um die zweite Querachse 12 verschwenkbar an dem Lehnenschwenkmechanismus 18 befestigt. Der Lehnenschwenkmechanismus 18 weist zunächst einen ersten Schwenkhebel 22 auf. Der erste Schwenkhebel 22 ist einerseits um die zweite Querachse 12 verschwenkbar an der Rückenlehne 4 und andererseits um eine dritte Querachse 24 verschwenkbar an einer Stützeinrichtung 26 befestigt. Bei der Stützeinrichtung 26 kann es sich beispielsweise um einen Fahrzeugboden und/oder einen Fahrzeugsitzunterbau handeln, an dem entsprechende Befestigungsteile 28 vorgesehen sind, die eine verschwenkbare Befestigung des ersten Schwenkhebels 22 an der Stützeinrichtung 26 ermöglichen. Der Lehnenschwenkmechanismus 18 umfasst ferner einen zweiten Schwenkhebel 30, der einerseits um eine vierte Querachse 32 verschwenkbar an dem Befestigungsteil 28 der Stützeinrichtung 26 und andererseits um eine fünfte Querachse 34 verschwenkbar an der Rückenlehne 4 befestigt ist.

Betrachtet man den Lehnenschwenkmechanismus 18 in Querrichtung, also von der Seite wie in Fig. 1, so ist der Abstand a zwischen der zweiten Querachse 12 und der fünften Querachse 34 kleiner als der Abstand b zwischen der dritten Querachse 24 und der vierten Querachse 32 ausgebildet, um ein besonders starkes Verschwenken der Rückenlehne 4 zu ermöglichen, wie dies später eingehender erläutert wird. Demgegenüber entspricht der Abstand c zwischen der zweiten Querachse 12 und der dritten Querachse 24 dem Abstand d zwischen der vierten Querachse 32 und der fünften Querachse 34, d. h. es gilt c = d, so dass für den ersten und zweiten Schwenkhebel 22, 30 dieselben Bauteile verwendet werden. Darüber hinaus ist die dritte Querachse 24 in einer Höhe h₁ an dem Befestigungsteil 28 angeordnet, während die vierte Querachse 32 in einer Höhe h₂ an dem Befestigungsteil 28 der Stützeinrichtung 26 angeordnet ist, wobei h₁ größer als h₂ ist. Auch ist die vierte Querachse 32 entgegen der Sitzrichtung 8 hinter der dritten Querachse 24 angeordnet.

Der Lehnenschwenkmechanismus 18 bildet somit ein Gelenkviereck aus, dessen Ecken von der zweiten, dritten, vierten und fünften Querachse 12, 24, 32, 34 gebildet sind. Ein solches Gelenkviereck gewährleistet eine besonders hohe Stabilität bzw. eine besonders stabile Abstützung der Rückenlehne 4 sowie ein besonders vorteilhaftes Verschwenken derselben um die zweite Querachse 12, wie dies später Bezugnahme auf die Fig. 1 bis 5 erläutert wird.

Der Sitzteilschwenkmechanismus 20 weist einen dritten Schwenkhebel 36 auf, der einerseits um eine sechste Querachse 38 verschwenkbar an dem Sitzteil 6 und andererseits um eine siebte Querachse 40 verschwenkbar an dem Befestigungsteil 28 der Stützeinrichtung 26 befestigt ist. Sowohl die siebte Querachse 40 des Sitzteilschwenkmechanismus 20 als auch die dritte und vierte Querachse 24, 32 des Lehnenschwenkmechanismus 18 sind unbeweglich gegenüber der Stützeinrichtung 26 angeordnet.

Nachstehend werden die Funktionsweise sowie weitere Merkmale des Kraftfahrzeugsitzes 2 unter Bezugnahme auf die Fig. 1 bis 5 beschrieben.

Fig. 1 zeigt die Rückenlehne 4 in einer im Wesentlichen aufrechten Gebrauchsstellung. Die Rückenlehne 4 ist über den Lehnenschwenkmechanismus 18 an der Stützeinrichtung 26 abgestützt. Das Sitzteil 6 ist mit seinem hinteren Abschnitt an dem unteren Abschnitt 16 der Rückenlehne 4 befestigt und mit seinem vorderen Abschnitt über den Sitzteilschwenkmechanismus 20 an der Stützeinrichtung 26 abgestützt. In dieser ersten Position des Sitzteils 6 ist das Sitzteil 6 gegenüber einer Horizontalen 42 geneigt, wobei das Sitzteil 6 entgegen der Sitzrichtung 8 nach unten geneigt ist. In der ersten Position des Sitzteils 6 ist der dritte Schwenkhebel 26 gegenüber einer Vertikalen 44 in Sitzrichtung 8 nach vorne geneigt.

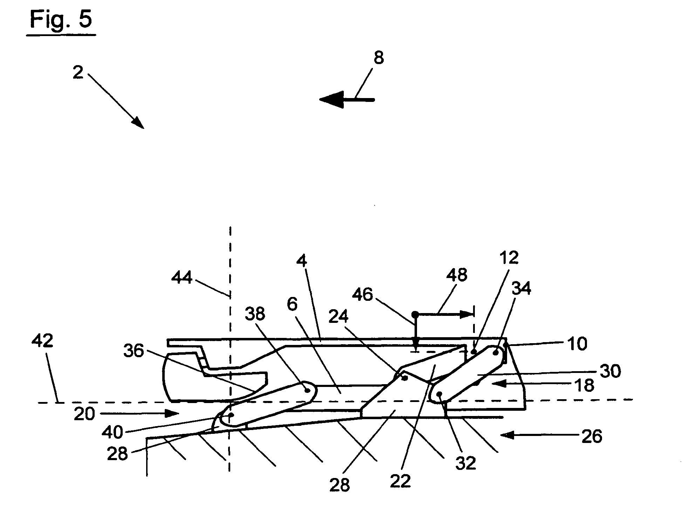

Sollte der Kraftfahrzeugsitz 2 nicht für einen Fahrzeuginsassen benötigt werden, so kann die Rückenlehne 4 von der in Fig. 1 gezeigten Gebrauchsstellung um die zweite Querachse 12 über die in den Fig. 2 bis 4 gezeigten Zwischenstellungen in Sitzrichtung 8 nach vorne in die in Fig. 5 gezeigte Nichtgebrauchsstellung verschwenkt werden. Der Lehnenschwenkmechanismus 18 ist dabei derart ausgebildet, dass die zweite Querachse 12 durch Verschwenken der Rückenlehne 4 um diese zweite Querachse 12 in die Nichtgebrauchsstellung nach unten und hinten versetzt wird, wie dies anhand der Pfeile 46 bzw. 48 angedeutet ist. Ferner wird das Sitzteil 6 aufgrund der Befestigung an der Rückenlehne 4 nach hinten versetzt, was einerseits auf die reine Schwenkbewegung der Rückenlehne 4 um die zweite Querachse 12 und andererseits auf das Zurückversetzen der Rückenlehne 4 entgegen der Sitzrichtung 8 zurückzuführen ist.

Während des Zurückziehens des Sitzteils 6 in die in Fig. 5 dargestellte zweite Position verschwenkt ferner der dritte Schwenkhebel 36 um die Querachsen 38 und 40, so dass dieser in der zweiten Position des Sitzteils 6 gegenüber der Vertikalen 44 entgegen der Sitzrichtung 8 nach hinten geneigt ist. Sowohl durch die Schwenkbewegung des dritten Schwenkhebels 36 nach hinten als auch durch die Absenkung der Rückenlehne 4 in die Nichtgebrauchsstellung, wird eine Absenkung des Sitzteils 6 gegenüber der ersten Position von Fig. 1 bewirkt. Der Lehnenschwenkmechanismus 18 und der Sitzteilschwenkmechanismus 20 sind dabei derart aufeinander abgestimmt, dass das Sitzteil 6 in der zweiten Position in der Horizontalen 42 angeordnet ist.

### Bezugszeichenliste

- 2: Kraftfahrzeugsitz
- 4: Rückenlehne
- 6: Sitzteil
- 8: Sitzrichtung
- 10: erste Querachse
- 12: zweite Querachse
- 14: oberer Abschnitt
- 16: unterer Abschnitt
- 18: Lehnenschwenkmechanismus
- 20: Sitzteilschwenkmechanismus
- 22: erster Schwenkhebel
- 24: dritte Querachse
- 26: Stützeinrichtung
- 28: Befestigungsteile
- 30: zweiter Schwenkhebel
- 32: vierte Querachse
- 34: fünfte Querachse
- 36: dritter Schwenkhebel
- 38: sechste Querachse
- 40: siebte Querachse
- 42: Horizontale
- 44: Vertikale
- 46: Pfeil
- 48: Pfeil
- a: Abstand
- b: Abstand
- c: Abstand
- d: Abstand
- h₁: Höhe
- h₂: Höhe

## Patentansprüche

1. Kraftfahrzeugsitz (2) mit einer Rückenlehne (4), einem Sitzteil (6), das um eine erste Querachse (10) verschwenkbar an der Rückenlehne (4) befestigt ist, einem Sitzteilschwenkmechanismus (20) und einem Lehnenschwenkmechanismus (18),
wobei die Rückenlehne (4) um eine zweite Querachse (12) verschwenkbar an dem Lehnenschwenkmechanismus (18) befestigt ist, so dass die Rückenlehne (4) von einer Gebrauchsstellung, in der das Sitzteil (6) eine erste Position einnimmt, um die zweite Querachse (12) nach vorne in eine Nichtgebrauchsstellung verschwenkbar ist, in der das Sitzteil (6) eine zweite Position einnimmt, in der das Sitzteil (6) gegenüber der ersten Position nach hinten versetzt ist, und der Lehnenschwenkmechanismus (18) derart ausgebildet ist, dass die zweite Querachse (12) durch Verschwenken der Rückenlehne (4) in die Nichtgebrauchsstellung nach hinten versetzbar ist, wobei eine Stützeinrichtung (26) vorgesehen ist und der Lehnenschwenkmechanismus (18) einen ersten Schwenkhebel (22), der einerseits um die zweite Querachse (12) verschwenkbar an der Rückenlehne (4) und andererseits um eine dritte Querachse (24) verschwenkbar an der Stützeinrichtung (26) befestigt ist, und einen zweiten Schwenkhebel (30) aufweist, der einerseits um eine vierte Querachse (32) verschwenkbar an der Stützeinrichtung (26) und andererseits um eine fünfte Querachse (34) verschwenkbar an der Rückenlehne (4) befestigt ist,
**dadurch gekennzeichnet, dass** der Abstand (c) zwischen der zweiten und der dritten Querachse (12, 24) und der Abstand (d) zwischen der vierten und der fünften Querachse (32, 34) gleich und der erste und zweite Schwenkhebel (22, 30) identisch ausgebildet sind.

2. Kraftfahrzeugsitz (2) nach Anspruch 1, **dadurch gekennzeichnet, dass** die zweite Querachse (12) durch Verschwenken der Rückenlehne (4) in die Nichtgebrauchsstellung nach unten versetzt ist.

3. Kraftfahrzeugsitz (2) nach einem der Ansprüche 1 oder 2, **dadurch gekennzeichnet, dass** die Rückenlehne (4) bezogen auf deren Längsrichtung einen oberen Abschnitt (14), der vor der zweiten Querachse (12) angeordnet ist, und einen unteren Abschnitt (16) aufweist, der hinter der zweiten Querachse (12) angeordnet ist, wobei das Sitzteil (6) um die erste Querachse (10) verschwenkbar an dem unteren Abschnitt (16) befestigt ist.

4. Kraftfahrzeugsitz (2) nach einem der vorangehenden Ansprüche, **dadurch gekennzeichnet, dass** die Stützeinrichtung (26) ein Fahrzeugboden und/oder ein Fahrzeugsitzunterbau ist.

5. Kraftfahrzeugsitz (2) nach einem der vorangehenden Ansprüche, **dadurch gekennzeichnet, dass** der Abstand (a) zwischen der zweiten und der fünften Querachse (12, 34) kleiner als der Abstand (b) zwischen der dritten und vierten Querachse (24, 32) ausgebildet ist.

6. Kraftfahrzeugsitz (2) nach einem der vorangehenden Ansprüche, **dadurch gekennzeichnet, dass** die dritte Querachse (24) höher als die vierte Querachse (32) angeordnet ist.

7. Kraftfahrzeugsitz (2) nach einem der vorangehenden Ansprüche, **dadurch gekennzeichnet, dass** die vierte Querachse (32) entgegen der Sitzrichtung hinter der dritten Querachse (24) angeordnet ist.

8. Kraftfahrzeugsitz (2) nach einem der vorangehenden Ansprüche, **dadurch gekennzeichnet, dass** der Sitzteilschwenkmechanismus (20) derart mit dem Lehnenschwenkmechanismus (18) zusammenwirkt, dass das Sitzteil (6) in der ersten Position gegenüber einer Horizontalen (42) geneigt und in der zweiten Position in der Horizontalen (42) angeordnet ist.

9. Kraftfahrzeugsitz (2) nach Anspruch 8, **dadurch gekennzeichnet, dass** das Sitzteil (6) in der zweiten Position ferner gegenüber der ersten Position abgesenkt ist.

10. Kraftfahrzeugsitz (2) nach einem der Ansprüche 8 oder 9, **dadurch gekennzeichnet, dass** der Sitzteilschwenkmechanismus (20) einen dritten Schwenkhebel (36) aufweist, der einerseits um eine sechste Querachse (38) verschwenkbar an dem Sitzteil (6) und andererseits um eine siebte Querachse (40) verschwenkbar an der Stützeinrichtung (26) befestigt ist.

11. Kraftfahrzeugsitz (2) nach Anspruch 10, **dadurch gekennzeichnet, dass** der dritte Schwenkhebel (36) in der ersten Position des Sitzteils (6) nach vorne geneigt ist.

12. Kraftfahrzeugsitz (2) nach einem der Ansprüche 10 oder 11, **dadurch gekennzeichnet, dass** der dritte Schwenkhebel (36) in der zweiten Position des Sitzteils (6) nach hinten geneigt ist.

13. Kraftfahrzeugsitz (2) nach einem der Ansprüche 10 bis 12, **dadurch gekennzeichnet, dass** die dritte, vierte und siebte Querachse (24, 32, 40) unbeweglich gegenüber der Stützeinrichtung (26) angeordnet sind.

## Claims

1. A vehicle seat (2), comprising a backrest (4), a seat part (6) which is pivotably fastened to the backrest (4) about a first transverse axis (10), a seat part pivoting mechanism (20) and a backrest pivoting mechanism (18), with the backrest (4) being pivotably fastened to the backrest pivoting mechanism (18) about a second transverse axis (12), so that the backrest (4) can be pivoted from an in-use position in which the seat part (6) assumes a first position about the second transverse axis (12) in a forward direction to a non-use position in which the seat part (6) assumes a second position in which the seat part (6) is displaced to the rear in relation to the first position, and the backrest pivoting mechanism (18) is arranged in such a way that the second transverse axis (12) can be displaced to the rear to the non-use position by pivoting the backrest (4), with a support device (26) being provided and the backrest pivoting mechanism (18) comprising a first pivoting lever (22) which on the one hand is pivotably fastened about the second transverse axis (12) to the backrest (4) and on the other hand is pivotably fastened about a third transverse axis (24) to the support device (26), and comprises a second pivoting lever (30) which is pivotably fastened on the one hand about a fourth transverse axis (32) to the support device (26) and is pivotably fastened on the other hand about a fifth transverse axis (34) to the backrest (4), **characterized in that** the distance (c) between the second and third transverse axis (12, 24) and the distance (d) between the fourth and fifth transverse axis (32, 34) are identical and the first and second pivoting lever (22, 30) are arranged identically.

2. A motor vehicle seat (2) according to claim 1, **characterized in that** the second transverse axis (12) is displaced downwardly to the non-use position by pivoting the backrest (4).

3. A motor vehicle seat (2) according to one of the claims 1 or 2, **characterized in that** the backrest (4), relating to its longitudinal direction, comprises an upper section (14) which is arranged before the second transverse axis (12) and a bottom section (16) which is arranged behind the second transverse axis (12), with the seat part (6) being pivotably fastened about the first transverse axis (10) to the bottom section (16).

4. A motor vehicle seat (2) according to one of the preceding claims, **characterized in that** the support device (26) is a vehicle floor and/or a vehicle seat base.

5. A motor vehicle seat (2) according to one of the preceding claims, **characterized in that** the distance (a) between the second and fifth transverse axis (12, 34) is arranged to be smaller than the distance (b) between the third and fourth transverse axis (24, 32).

6. A motor vehicle seat (2) according to one of the preceding claims, **characterized in that** the third transverse axis (24) is arranged higher than the fourth transverse axis (32).

7. A motor vehicle seat (2) according to one of the preceding claims, **characterized in that** the fourth transverse axis (32) is arranged against the seat direction behind the third transverse axis (24).

8. A motor vehicle seat (2) according to one of the preceding claims, **characterized in that** the seat part pivoting mechanism (20) cooperates with the backrest pivoting mechanism (18) in such a way that the seat part (6) is inclined in relation to the horizontal (42) in the first position and is arranged in the horizontal (42) in the second position.

9. A motor vehicle seat (2) according to claim 8, **characterized in that** the seat part (6) is further lowered in the second position in relation to the first position.

10. A motor vehicle seat (2) according to one of the claims 8 or 9, **characterized in that** the seat part pivoting mechanism (20) comprises a third pivoting lever (36) which is fastened to the seat part (6) in a pivoting manner about a sixth transverse axis (38) on the one hand and to the support device (26) in a pivoting manner about a seventh transverse axis (40) on the other hand.

11. A motor vehicle seat (2) according to claim 10, **characterized in that** the third pivoting lever (36) is forwardly inclined in the first position of the seat part (6).

12. A motor vehicle seat (2) according to one of the claims 10 or 11, **characterized in that** the third pivoting lever (36) is inclined to the rear in the second position of the seat part (6).

13. A motor vehicle seat (2) according to one of the claims 10 to 12, **characterized in that** the third, fourth and seventh transverse axis (24, 32, 40) is immovably arranged in relation to the support device (26).

## Revendications

1. Siège de véhicule à moteur (2) avec un dossier (4), une partie d'assise (6) qui est fixée au dossier (4) de façon à pouvoir pivoter autour d'un premier axe transversal (10), un mécanisme de pivotement de la partie d'assise (20) et un mécanisme de pivotement du dossier (18),
dans lequel le dossier (4) est fixé au mécanisme de pivotement du dossier (18) de façon à pouvoir pivoter autour d'un deuxième axe transversal (12), de telle manière que le dossier (4) puisse pivoter vers l'avant autour du deuxième axe transversal (12) d'une position d'utilisation dans laquelle la partie d'assise (6) prend une première position à une position de non-utilisation dans laquelle la partie d'assise (6) prend une deuxième position dans laquelle la partie d'assise (6) est reculée vers l'arrière par rapport à la première position, et le mécanisme de pivotement du dossier (18) est conformé de telle manière que le deuxième axe transversal (12) puisse être reculé vers l'arrière par le pivotement du dossier (4) dans la position de non-utilisation,
un dispositif d'appui (26) étant prévu et le mécanisme de pivotement du dossier (18) présentant un premier levier pivotant (22) qui est fixé d'une part au dossier (4) de façon à pouvoir pivoter autour du deuxième axe transversal (12) et d'autre part au dispositif d'appui (26) de façon à pouvoir pivoter autour d'un troisième axe transversal (24), et un deuxième levier pivotant (30) qui est fixé d'une part au dispositif d'appui (26) de façon à pouvoir pivoter autour d'un quatrième axe transversal (32) et d'autre part au dossier (4) de façon à pouvoir pivoter autour d'un cinquième axe transversal (34),
**caractérisé en ce que** la distance (c) entre le deuxième axe transversal et le troisième (12, 24) et la distance (d) entre le quatrième axe transversal et le cinquième (32, 34) est la même et les premier et deuxième leviers pivotants (22, 30) ont une conformation identique.

2. Siège de véhicule à moteur (2) selon la revendication 1, **caractérisé en ce que** le deuxième axe transversal (12) peut être déplacé vers le bas par le basculement du dossier (4) dans la position de non-utilisation.

3. Siège de véhicule à moteur (2) selon l'une des revendications 1 ou 2, **caractérisé en ce que** le dossier (4) présente par rapport à son orientation longitudinale une partie supérieure (14) qui est disposée devant le deuxième axe transversal (12) et une partie inférieure qui est disposée derrière le deuxième axe transversal (12), la partie d'assise (6) étant fixée à la partie inférieure (16) de façon à pouvoir pivoter autour du premier axe transversal (10).

4. Siège de véhicule à moteur (2) selon l'une des revendications précédentes, **caractérisé en ce que** le dispositif d'appui (26) est un plancher de véhicule et/ou un châssis de siège de véhicule.

5. Siège de véhicule à moteur (2) selon l'une des revendications précédentes, **caractérisé en ce que** la distance (a) entre le deuxième axe transversal et le cinquième (12, 34) est inférieure à la distance (b) entre le troisième axe transversal et le quatrième (24, 32).

6. Siège de véhicule à moteur (2) selon l'une des revendications précédentes, **caractérisé en ce que** le troisième axe transversal (24) est disposé plus haut que le quatrième axe transversal (32).

7. Siège de véhicule à moteur (2) selon l'une des revendications précédentes, **caractérisé en ce que** le quatrième axe transversal (32) est disposé derrière le troisième axe transversal (24) en sens inverse de l'orientation des sièges.

8. Siège de véhicule à moteur (2) selon l'une des revendications précédentes, **caractérisé en ce que** le mécanisme de pivotement de la partie d'assise (20) coopère avec le mécanisme de pivotement du dossier (18) de telle manière que la partie d'assise (6) soit inclinée par rapport à une horizontale (42) dans la première position et soit disposée sur l'horizontale (42) dans la deuxième position.

9. Siège de véhicule à moteur (2) selon la revendication 8, **caractérisé en ce que** la partie d'assise (6) est abaissée plus loin dans la deuxième position que dans la première position.

10. Siège de véhicule à moteur (2) selon l'une des revendications 8 ou 9, **caractérisé en ce que** le mécanisme de pivotement de la partie d'assise (20) présente un troisième levier pivotant (36) qui est fixé, d'une part, à la partie d'assise (6) de façon à pouvoir pivoter autour d'un sixième axe transversal (38) et d'autre part au dispositif d'appui (26) de façon à pouvoir pivoter autour d'un septième axe transversal (40).

11. Siège de véhicule à moteur (2) selon la revendication 10, **caractérisé en ce que** le troisième levier pivotant (36) est incliné vers l'avant dans la première position de la partie d'assise (6).

12. Siège de véhicule à moteur (2) selon l'une des revendications 10 ou 11, **caractérisé en ce que** le troisième levier pivotant (36) est incliné vers l'arrière dans la deuxième position de la partie d'assise (6).

13. Siège de véhicule à moteur (2) selon l'une des revendications 10 à 12, **caractérisé en ce que** le troisième axe transversal, le quatrième et le septième (24, 32, 40) sont disposés de façon immobile par rapport au dispositif d'appui (26).
